# EUROPÄISCHE PATENTSCHRIFT

(11) **EP 3 369 343 B1**
(45) Veröffentlichungstag und Bekanntmachung des Hinweises auf die Patenterteilung: **25.12.2019**
(21) Anmeldenummer: 18159830.1
(22) Anmeldetag: 02.03.2018
(51) Int. Cl.: A47B 95/04

(54) **RAMMSCHUTZVORRICHTUNG FÜR REGALE**
BUMPER DEVICE FOR DISPLAY RACKS
DISPOSITIF DE PROTECTION CONTRE LES CHOCS POUR ETAGERE

(30) Priorität: 03.03.2017 DE 202017001171 U
(43) Veröffentlichungstag der Anmeldung: 05.09.2018
(73) Patentinhaber: Tegometall International AG, 8574 Lengwil (CH)
(72) Erfinder: Bohnacker, Ulrich, 8559 Fruthwilen (CH)
(74) Vertreter: Strehl Schübel-Hopf & Partner

(56) Entgegenhaltungen:
- FR-A1- 2 750 588
- NL-A- 7 511 438
- US-A- 3 239 070
- US-A1- 2016 029 796

## Beschreibung

Die Erfindung betrifft eine Rammschutzvorrichtung für ein Regal und ein mit einer solchen Rammschutzvorrichtung ausgestattetes Regal.

Aus der DE 20 2012 102 741 U1 ist ein modulares Regalsystem bekannt. Modulare Regalsysteme zeichnen sich dadurch aus, dass sie leicht aus einzelnen Bestandteilen zusammengesetzt bzw. in diese zerlegt werden können. So lassen sie sich unkompliziert an ihrem Bestimmungsort aufbauen und entsprechend der dortigen Bedürfnisse einrichten bzw. umrüsten. Sie haben sich besonders zur Einrichtung von Läden bewährt, weil von Ladeneinrichtern eine individuelle Anpassbarkeit an die ständig wechselnden Warensortimente erwünscht wird.

Es ist ferner bekannt, Regale eines solchen Regalsystems mit Abweisen auszustatten, die auch Rammschutzstangen oder Stoßfängerstangen bezeichnet werden. Dadurch sollen Stöße von Flurfahrzeugen, Einkaufswägen oder anderen im Bereich des Regals bewegten Gerätschaften abgefangen werden.

Das Dokument US 2016/029796 A1 offenbart eine Rammschutzvorrichtung nach dem Oberbegriff des Anspruchs 1.

Diese Rammschutzstangen oder Stoßfängerstangen können beispielsweise in horizontaler Richtung in Halterungsringe eingeschoben werden und dort befestigt werden. Falls der Platz neben dem Regal nicht ausreicht, um die Rammschutzstange von der Seite des Regals aus einzufädeln, ist eine Montage oder Demontage der Rammschutzstange ohne ein Verrücken des Regals schwierig. In diesem Fall muss die Rammschutzstange mitsamt den Halterungen montiert oder demontiert werden. Die Halterungen sind aber oft bodennah und/oder an schwer zugänglichen Stellen verschraubt. Der Erfindung liegt die Aufgabe zugrunde, eine insbesondere auch in beengten räumlichen Verhältnissen einfach zu montierende Rammschutzvorrichtung und ein damit ausgestattetes Regal bzw. Regalsystem bereitzustellen.

Die Aufgabe wird gelöst durch eine Rammschutzvorrichtung mit den Merkmalen des Anspruchs 1. Vorteilhafte Ausgestaltungen der Erfindung ergeben sich aus den Unteransprüchen.

Die Erfindung betrifft insbesondere eine Rammschutzvorrichtung für ein Regal, umfassend eine Rammschutzstange und wenigstens zwei Halterungen, wobei die Halterungen jeweils ein erstes, zur Befestigung an einem Regal ausgebildetes Ende und ein zweites, zum Halten der Rammschutzstange ausgebildetes Ende haben.

Es wird vorgeschlagen, dass die Rammschutzstange in einer quer zur Längsrichtung der Rammschutzstange verlaufenden Aufsteckrichtung auf die zweiten Enden der Halterungen aufsteckbar ist. Durch die quer zur Längsrichtung, insbesondere vertikal verlaufende Aufsteckrichtung kann eine Montage der Rammschutzvorrichtung auch in beengten räumlichen Verhältnissen ermöglicht werden, da ein Zugang von den Seiten des Regals aus entfallen kann. Insbesondere können Rammschutzvorrichtungen auch an unmittelbar nebeneinander stehenden Regalen bzw. in Anbau-Regalsystemen ohne Probleme so montiert werden, dass sich eine stetig fortgesetzte Rammschutzstange ergibt.

Ferner wird vorgeschlagen, dass die Rammschutzvorrichtung Rastverbindungsmittel zum Befestigen der Rammschutzstange an den Halterungen umfasst. Die Rastverbindung ist schnell und insbesondere werkzeugfrei herstellbar, was die Montage weiter vereinfacht.

Ferner wird vorgeschlagen, dass die die Rammschutzstange parallel zur Aufsteckrichtung verlaufende Schlitze umfasst, in welche die Enden der Halterungen einsteckbar sind. Durch die parallele Ausrichtung der Schlitze können flache Metallprofile als Halterungen verwendet werden, die in der Richtung der abzufangenden Stöße eine ausreichende Stabilität und Elastizität haben. Ferner kann eine sehr stabile Verbindung auch bei vergleichsweise geringen Durchmessern der Rammschutzstange erreicht werden.

Erfindungsgemäß umfasst die Rammschutzstange wenigstens ein Metallrohr und zumindest ein wenigstens teilweise in ein Ende des Metallrohrs eingestecktes Kunststoffteil, wobei das Kunststoffteil einer Befestigung der Rammschutzstange an einer der Halterungen dient. Durch den mehrteiligen Aufbau ist eine kostengünstige und einfache Konstruktion möglich, die die vorteilhaften Eigenschaften von Metall und Kunststoff kombiniert.

Erfindungsgemäß umfasst das Ende des Metallrohrs einen Teilschlitz, der sich mit einer Öffnung des Kunststoffteils zu dem Schlitz der Rammschutzstange ergänzt. Der Teilschlitz im Metallrohr ermöglicht eine Verdrehsicherung und eine direkte Kraftübertragung zwischen Metallrohr und metallischer Halterung beim Abfangen von Stoßkräften, während die teilweise Einbettung in Kunststoff eine stabile kraftschlüssige Verbindung oder Rastverbindung mit Dämpfungseigenschaften verbindet. Die Herstellung kann im Vergleich zu Ausführungsformen mit ganz von Metall umschlossenen Schlitzen vereinfacht werden, wenn der Teilschlitz an einer seiner schmalen Seiten offen ist. Eine einfache Verdrehsicherung kann gewährleistet werden, wenn das Kunststoffteil einen Vorsprung umfasst, der mit dem Teilschlitz des Metallrohrs in Eingriff steht und das Kunststoffteil gegen Verdrehen im Metallrohr sichert.

Ferner wird vorgeschlagen, dass das Kunststoffteil einen ersten, mit Sägezahnprofil ausgestatteten Bereich zum Einstecken in das Metallrohr und einen Kragenbereich umfasst. Ein Außendurchmesser des Kunststoffteils im Kragenbereich ist dabei vorteilhaft größer als ein Innendurchmesser des Metallrohrs, um einen Anschlag zu bilden und ein Hineingleiten des Kunststoffteils in das Metallrohr zu vermeiden. In einer besonders vorteilhaften Ausgestaltung der Erfindung ist der Außendurchmesser des Kragenbereichs gleich einem Außendurchmesser des Metallrohrs, so dass die Außenflächen stetig ineinander übergehen und so eine stufenfreie Führungsfläche der Rammschutzstange bilden.

Ferner wird vorgeschlagen, dass das Metallrohr aus Edelstahl gefertigt ist. Dadurch kann ein sehr stabiler, korrosionsfester Rammschutz erreicht werden.

Weitere Vorteile können erreicht werden, wenn das zweite Ende der mit dem Kunststoffteil verbundenen Halterung eine Vertiefung oder einen Durchbruch aufweist, in welche oder welchen eine an einer Innenwand der Öffnung des Kunststoffteils ausgebildete Rastnase eingreift. Diese Art der Rastverbindung erweist sich als sehr robust und einfach herstellbar.

Ferner wird vorgeschlagen, dass das Kunststoffteil als Verbinderelement zum fluchtenden Verbinden zweier Metallrohre ausgebildet ist. Dadurch können lange Rammschutzvorrichtungen an langen Regalreihen eines insbesondre modularen Regalsystems, nach Belieben durch Zusammenstecken aufgebaut werden.

Weitere Vorteile können erreicht werden, wenn das Kunststoffteil als Endkappe zum Verschließen eines offenen Endes des Metallrohrs ausgebildet ist. In diesem Fall kann die technische Funktion des Kunststoffteils bei der Befestigung mit einer Schutzfunktion kombiniert werden. Ferner kann ein ansprechender ästhetischer Gesamteindruck erreicht werden, und zwar insbesondere dann, wenn ein aus dem Metallrohr herausragender Kragenbereich das Außenprofil des Metallrohrs optisch fortsetzt oder ergänzt.

Ein weiterer Aspekt der Erfindung betrifft ein Regal mit einer Rammschutzvorrichtung der oben beschriebenen Art.

Insbesondere können die Halterungen mit den Fußteilen des Regals verschraubt sein. Es sind jedoch auch Ausgestaltungen der Erfindung denkbar, in denen die Rammschutzvorrichtung an einem Regalboden oder einer Mittelkonsole eines Regals befestigt ist, oder die Halterungen durch eine Steck- oder Rastverbindung mit den Fußteilen verbunden sind.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.

Dabei zeigen:
- Fig. 1: ein Regal mit einer Rammschutzvorrichtung nach einem ersten Ausführungsbeispiel der Erfindung;
- Fig. 2: eine an einem Regalsockel montierte Halterung der Rammschutzvorrichtung aus Figur 1 in einer Seitenansicht;
- Fig. 3: die Halterung aus Fig. 2 in einer transparenten Darstellung;
- Fig. 4: eine Rammschutzstange der erfindungsgemäßen Rammschutzvorrichtung in einem vormontierten Zustand;
- Fig. 5: eine Metallstange der Rammschutzstange aus Fig. 4;
- Fig. 6: ein als Endkappe ausgestaltetes Kunststoffteil der Rammschutzvorrichtung aus Figur 1 in einer perspektivischen Ansicht;
- Fig. 7: das Kunststoffteil aus Fig. 4 in einer Schnittdarstellung;
- Fig. 8: ein als Verbingungsstück ausgestaltetes Kunststoffteil einer Rammschutzvorrichtung nach einer weiteren Ausgestaltung der Erfindung; und
- Fig. 9: eine schematische Darstellung zur Montage der erfindungsgemäßen Rammschutzvorrichtung.

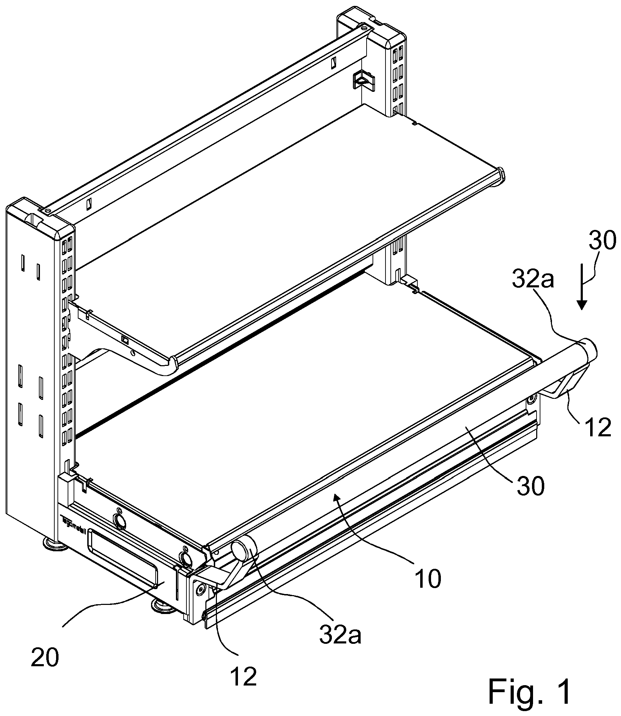

Figur 1 zeigt eine Rammschutzvorrichtung für ein Regal nach einem ersten Ausführungsbeispiel der Erfindung. Die Rammschutzvorrichtung umfasst eine Rammschutzstange 10 und zwei Halterungen 12.

Das Regal ist ein Ladenregal. Die Erfindung ist aber auch auf andere Regaltypen anwendbar, insbesondere Lagerregale oder Schwerlastregale. Die Rammschutzstange 10 ist dazu ausgelegt, je nach Anwendungsbereich Stöße von Einkaufswägen, Rollwägen, Hubwägen oder Gabelstaplern abzufangen.

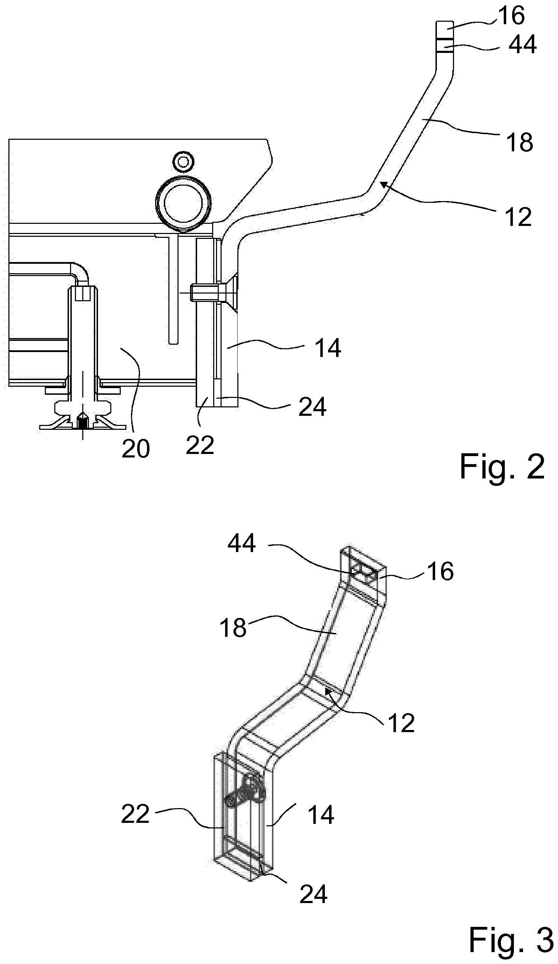

Die Figuren 2 und 3 zeigen die Halterungen aus Figur 1 in einer detaillierteren Darstellung.

Die Halterungen haben jeweils ein erstes, zur Befestigung an einem Regal ausgebildetes Ende 14 und ein zweites, zum Halten der Rammschutzstange ausgebildetes Ende 16. Beide Enden 14, 16 sind im montierten Zustand vertikal ausgerichtet und sind durch einen Verbindungsbereich 18 verbunden, der teilweise schräg verläuft und bewirkt, dass der Rammschutz vor dem Regal in der gewünschten Höhe gehalten wird, wenn die Rammschutzvorrichtung montiert ist. Die Halterung 12 ist in einer vorteilhaften Ausgestaltung aus einer Metallstange bzw. einem Metallband mit einem flachen, rechteckigen Querschnitt ausgebildet und so geformt und dimensioniert, dass Stöße von der erwarteten Kraft gegen die Rammschutzstange nicht zu einem Bruch führen sondern federnd abgefangen werden.

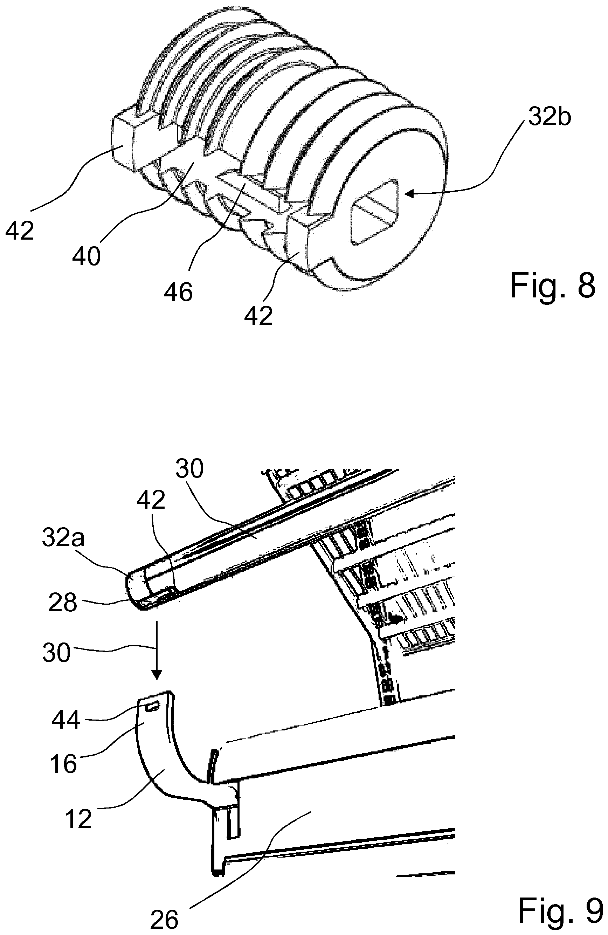

Die Rammschutzvorrichtung kann je nach Regaltyp an einem Fußteil bzw. Regalsockel 20, einer Säule, einer Konsole oder auch an einem Regalboden befestigt sein. In einer vorteilhaften Ausgestaltung des erfindungsgemäßen Regals bzw. eines Regalsystems umfasst das Regal dort, wo die Halterung 12 befestigt werden soll, eine angeschweißte Platte 22 mit einer Gewindebohrung zum Verschrauben der Halterung. Die Breite und Höhe der Platte 22 entspricht zumindest im Wesentlichen der Breite und Höhe des ersten Bereichs der Halterung 12, die mit der flachen, breiteren Seite des Querschnitts über ein Zwischenblech 24 an der Platte 22 anliegt und mit dieser verschraubt ist. Eine Verkleidung 26 (Fig. 9) des Regalsockels 20 hat, sofern vorhanden, einen Durchbruch, durch welchen die Halterung 12 nach außen ragen kann.

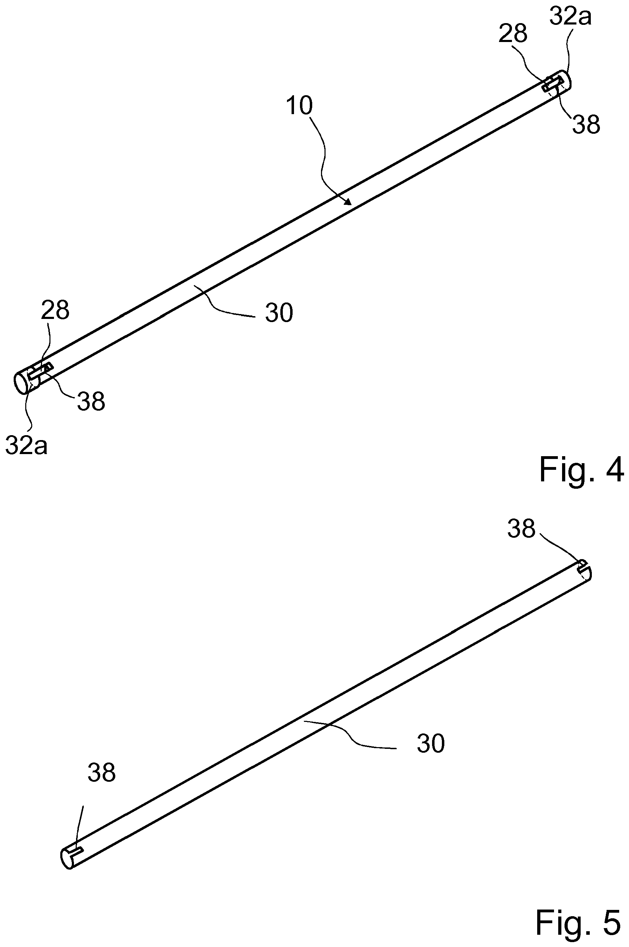

Fig. 4 zeigt die Rammschutzstange 10 in einem vormontierten Zustand.

Die Rammschutzstange 10 umfasst parallel zur Längsrichtung verlaufende Schlitze 28, in welche die Enden 16 der Halterungen 12 einsteckbar sind. Die Rammschutzstange 10 ist dadurch in einer quer zur Längsrichtung der Rammschutzstange 10 verlaufenden Aufsteckrichtung 30 (Fig. 9) auf die zweiten Enden 16 der Halterungen 12 aufsteckbar, wie dies in Fig. 9 erkennbar ist.

Die Rammschutzstange 10 umfasst ein Metallrohr 30 und zwei teilweise in ein Ende des Metallrohrs 30 eingesteckte Kunststoffteile 32a, die in dem in Fig. 1 dargestellten Ausführungsbeispiel als Endkappen zum Verschließen eines offenen Endes des Metallrohrs 30 ausgebildet sind und die gleichzeitig der Befestigung der Rammschutzstange 10 an jeweils einer der Halterungen 12 dienen.

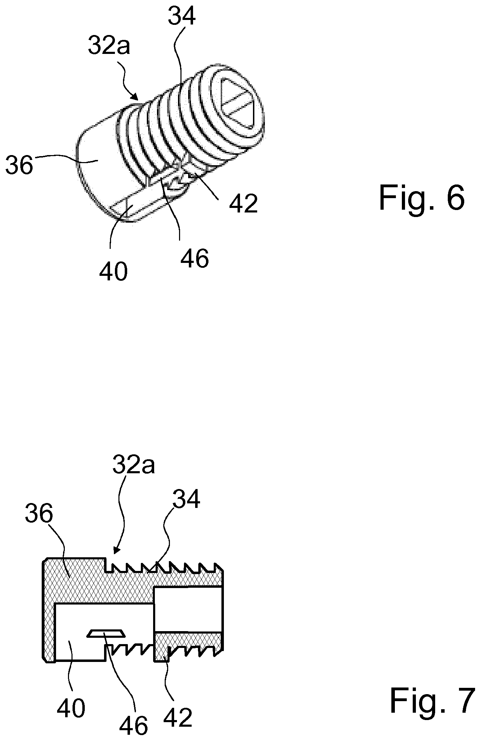

Die Kunststoffteile 32a sind in Figuren 6 und 7 detaillierter dargestellt. Jedes Kunststoffteil 32a hat einen ersten, mit Sägezahnprofil ausgestatteten Bereich 34 zum Einstecken in das Metallrohr und einen Kragenbereich 36. Ein Außendurchmesser des Kunststoffteils 32a im Kragenbereich 36 ist gleich einem Außendurchmesser des Metallrohrs 30, so dass die Außenfläche des Kragenbereichs 36 die Außenfläche des Metallrohrs 30 stetig fortsetzt.

In die beiden Enden des aus Edelstahl gefertigten Metallrohrs 30, das in Fig. 5 einzeln dargestellt ist, ist jeweils ein zum Ende des Rohrs hin offener Teilschlitz 38 eingearbeitet und das Kunststoffteil 32a hat ebenfalls eine Öffnung 40, die in der Längsrichtung bzw. in der Einsteckrichtung des Kunststoffteils 32a in das Metallrohr 30 sowohl mit dem profilierten Bereich 34 als auch mit dem Kragenbereich 36 des Kunststoffteils 32a überlappt.

Zur Montage der Rammschutzstange 10 werden zwei als Endkappen ausgebildete Kunststoffteile 32a in die beiden offenen Enden des Metallrohrs 10 eingesteckt, bis der Kragenbereich 36 an der Endkante des Metallrohrs 30 anschlägt. Ist das Kunststoffteil 32a bis zum Anschlag in das Metallrohr 30 eingesteckt, ergänzt sich der Teilschlitz 38 des Metallrohrs 30 mit der Öffnung 40 des Kunststoffteils 32a zu dem Schlitz 28 der Rammschutzstange 10.

Das Kunststoffteil 32a hat einen radial über den mit Sägezahnprofil ausgestatteten Bereich 34 ragenden Vorsprung 42, der mit dem Teilschlitz 38 des Metallrohrs 30 in Eingriff steht und das Kunststoffteil gegen Verdrehen im Metallrohr 30 sichert. Aufgrund des Vorsprungs 42 kann das Kunststoffteil 32a in nur einer Drehlage in das Ende des Metallrohrs 30 eingesteckt werden, und der Vorsprung 42 gewährleistet, dass die Öffnung 40 des Kunststoffteils 32a unterhalb des Teilschlitzes 38 bzw. mit diesem fluchtend angeordnet ist. Um die Aufnahme des Vorsprungs 42 zu ermöglichen, ist die axiale Länge des Teilschlitzes 38 etwas größer als die Läge der Öffnung 40 im Kunststoffteil 32a im vollständig eingesteckten Zustand des Kunststoffteils 32a.

Wie in Fig. 2, 3 und 9 dargestellt hat das zweite, freie Ende der mit dem Kunststoffteil 32a verbundenen Halterung 12 einen Durchbruch 44, in welchen eine an einer Innenwand der Öffnung 40 des Kunststoffteils 32a ausgebildete Rastnase 46 eingreift. Der Durchbruch 44 und die Rastnase 46 bilden Rastverbindungsmittel zum Befestigen der Rammschutzstange 10 an den Halterungen 12.

Zur Montage der Rammschutzvorrichtung werden zunächst die Halterungen 12 mit dem Regalsockel 20 verschraubt und die aus Metallrohr 30 und Kunststoffteilen 32a vormontierte Rammschutzstange 10 wird dann, wie dies in Fig. 9 dargestellt ist, mit nach unten offenen Schlitzen 28 vertikal von oben auf die Halterungen 12 aufgesteckt, so dass die zweiten Enden 16 der Halterungen 12 in die Schlitze 28 gleiten bis die Rastverbindungsmittel 44, 46 einrasten. Zum Lösen der Rastverbindungsmittel 44, 46 können an den Stirnseiten der Kunststoffteile 32a oder an einer anderen geeigneten Stelle Öffnungen zum Einschieben von geeigneten Werkzeugen vorgesehen sein.

Die Figur 8 zeigt ein zusätzliches, optionales Bauteil eines weiteren Ausführungsbeispiels der Erfindung. Um Wiederholungen zu vermeiden, beschränkt sich die nachfolgende Beschreibung dieses weiteren Ausführungsbeispiels im Wesentlichen auf Unterschiede zu dem ersten Ausführungsbeispiel der Erfindung. Wegen der unveränderten Merkmale wird auf die Beschreibung zum ersten Ausführungsbeispiel verwiesen. Für gleich oder ähnlich wirkende Merkmale der weiteren Merkmale werden gleiche Bezugszeichen verwendet, um die Ähnlichkeiten zu betonen.

Die Rammschutzvorrichtung nach dem zweiten Ausführungsbeispiel umfasst mehrere Metallrohre 30 der in Fig. 5 dargestellten Art, die aber nicht jeweils zwei als Endkappen ausgebildete Kunststoffteile 32a umfassen sondern über ein als Verbinderelement ausgestaltetes Kunststoffelement 32b gemäß Fig. 8 fluchtend miteinander verbunden sind und als gemeinsame Rammschutzstange für mehrere Regalmodule eines Regalsystems benutzt werden können. Nur die jeweils äußersten Enden der in der Reihe angeordneten Metallrohre 30 sind dann mit als Endkappen ausgestalteten Kunststoffteilen 32a der in Fig. 6 und 7 dargestellten Art ausgestattet.

Das Kunststoffteil 32b hat keinen Kragenbereich, so dass die Metallstangen 30 auf Stoß miteinander verbunden werden können.

### Bezugszeichenliste

- 10: Rammschutzstange
- 12: Halterung
- 14: erstes Ende
- 16: zweites Ende
- 18: Verbindungsbereich
- 20: Regalsockel
- 22: Platte
- 24: Zwischenblech
- 26: Verkleidung
- 28: Schlitz
- 30: Metallrohr
- 32a: Kunststoffteile (Endkappe)
- 32b: Kunststoffteil (Verbinder)
- 34: Bereich
- 36: Kragenbereich
- 38: Teilschlitz
- 40: Öffnung
- 42: Vorsprung
- 44: Durchbruch
- 46: Rastnase

## Patentansprüche

1. Rammschutzvorrichtung für ein Regal, umfassend eine Rammschutzstange (10) und wenigstens zwei Halterungen (12), wobei die Halterungen (12) ein freies, zum Halten der Rammschutzstange (10) ausgebildetes Ende (16) haben,
wobei die Rammschutzstange (10) in einer quer zur Längsrichtung der Rammschutzstange (10) verlaufenden Aufsteckrichtung (30) auf die freien Enden (16) der Halterungen (12) aufsteckbar ist,
wobei die Rammschutzstange (10) wenigstens ein Metallrohr (30) und zumindest ein wenigstens teilweise in ein Ende des Metallrohrs (30) eingestecktes Kunststoffteil (32a, 32b) umfasst, wobei das Kunststoffteil (32a, 32b) einer Befestigung der Rammschutzstange (10) an einer der Halterungen (12) dient, **dadurch gekennzeichnet, dass** das Ende des Metallrohrs (30) einen Teilschlitz (38) umfasst, der sich mit einer Öffnung (40)des Kunststoffteils (32a, 32b) zu dem Schlitz (28) der Rammschutzstange (10) ergänzt.

2. Rammschutzvorrichtung nach Anspruch 1,
**gekennzeichnet durch** Rastverbindungsmittel (44, 46) zum Befestigen der Rammschutzstange (10) an den Halterungen (12).

3. Rammschutzvorrichtung nach einem der vorhergehenden Ansprüche,
**dadurch gekennzeichnet, dass**
die Rammschutzstange (10) parallel zur Aufsteckrichtung (30) verlaufende Schlitze (28) umfasst, in welche die Enden (16) der Halterungen (12) einsteckbar sind.

4. Rammschutzvorrichtung nach Anspruch 1,
**dadurch gekennzeichnet, dass**
das Kunststoffteil (32a, 32b) einen Vorsprung (42) umfasst, der mit dem Teilschlitz (38) des Metallrohrs (30) in Eingriff steht und das Kunststoffteil (32a, 32b) gegen Verdrehen im Metallrohr (30) sichert.

5. Rammschutzvorrichtung nach einem der vorhergehenden Ansprüche,
**dadurch gekennzeichnet, dass**
das Kunststoffteil (32a) einen ersten, mit Sägezahnprofil ausgestatteten Bereich (34) zum Einstecken in das Metallrohr (30) und einen Kragenbereich (36) umfasst, wobei ein Außendurchmesser des Kunststoffteils (32a) im Kragenbereich (36) größer als ein Innendurchmesser des Metallrohrs (30) ist, insbesondere gleich einem Außendurchmesser des Metallrohrs (30) ist.

6. Rammschutzvorrichtung nach einem der vorhergehenden Ansprüche,
**dadurch gekennzeichnet, dass**
das Metallrohr (30) aus Edelstahl gefertigt ist.

7. Rammschutzvorrichtung nach einem der vorhergehenden Ansprüche,
**dadurch gekennzeichnet, dass**
das freie Ende (16) der mit dem Kunststoffteil (32a, 32b) verbundenen Halterung (12) eine Vertiefung oder einen Durchbruch (44) aufweist, in welche oder welchen eine an einer Innenwand der Öffnung (40) des Kunststoffteils (32a, 32b) ausgebildete Rastnase (46) eingreift.

8. Rammschutzvorrichtung nach einem der vorhergehenden Ansprüche,
**dadurch gekennzeichnet, dass**
das das Kunststoffteil (32b) als Verbinderelement zum fluchtenden Verbinden zweier Metallrohre (30) ausgebildet ist.

9. Rammschutzvorrichtung nach einem der vorhergehenden Ansprüche,
**dadurch gekennzeichnet, dass**
das das Kunststoffteil (32a) als Endkappe zum Verschließen eines offenen Endes des Metallrohrs (30) ausgebildet ist

10. Regal mit einer Rammschutzvorrichtung nach einem der vorhergehenden Ansprüche.

11. Regal nach Anspruch 10,
**dadurch gekennzeichnet, dass**
die Halterungen (12) mit einem Regalsockel (20) des Regals verschraubt sind.

## Claims

1. Bumper device for a shelf, comprising a bumping protection bar (10) and at least two holders (12), the holders (12) having a free end (16) adapted to hold the bumping protection bar (10),
wherein the bumping protection bar (10) can be plugged onto the free ends (16) of the holders (12) in a plug-on direction (30) extending transversely to the longitudinal direction of the bumping protection bar (10), wherein the bumping protection bar (10) comprises at least one metal tube (30) and at least one plastic part (32a, 32b) plugged at least partially into one end of the metal tube (30),
**characterized in that** the plastic part (32a, 32b) is configured to fasten the bumping protection bar (10) to one of the holders (12) and wherein the end of the metal tube (30) comprises a partial slot (38) which complements the an opening (40) of the plastic part (32a, 32b) so as to form a slot (28) of the bumping protection bar (10).

2. Bumper device according to claim 1,
**characterised by** further including latching connection means (44, 46) for securing the bumping protection bar (10) to the holders (12).

3. Bumper device according to one of the preceding claims,
**characterised in that**
the bumping protection bar (10) comprises slots (28) which run parallel to the insertion direction (30) and into which the ends (16) of the holders (12) can be inserted.

4. Bumper device according to claim 1,
**characterised in that**
the plastic part (32a, 32b) comprises a projection (42) which engages the partial slot (38) of the metal tube (30) and secures the plastic part (32a, 32b) against rotation within the metal tube (30).

5. Bumper device according to one of the preceding claims,
**characterised in that**
the plastic part (32a) comprises a first region (34) equipped with a sawtooth profile configured to be inserted into the metal tube (30) and a collar region (36), an outer diameter of the plastic part (32a) in the collar region (36) being greater than an inner diameter of the metal tube (30), in particular being equal to an outer diameter of the metal tube (30).

6. Bumper device according to one of the preceding claims,
**characterised in that**
the metal tube (30) is made of stainless steel.

7. Bumper device according to one of the preceding claims,
**characterised in that**
the free end (16) of the holder (12) connected to the plastic part (32a, 32b) has a recess or aperture (44) into which a latching lug (46) formed on an inner wall of the opening (40) of the plastic part (32a, 32b) engages.

8. Bumper device according to one of the preceding claims,
**characterised in that**
the plastic part (32b) is formed as a connector element for the aligned connection of two metal tubes (30).

9. Bumper device according to one of the preceding claims,
**characterised in that**
the plastic part (32a) is formed as an end cap for closing an open end of the metal tube (30)

10. Shelf including a bumper device according to one of the preceding claims.

11. Shelf according to claim 10,
**characterised in that**
the holders (12) are screwed onto a shelf base (20) of the shelf.

## Revendications

1. Dispositif antichocs pour une étagère, comprenant une barre de protection antichocs (10) et au moins deux supports (12), les supports (12) ayant une extrémité libre (16) adaptée à soutenir la barre de protection antichocs (10), dans lequel la barre de protection antichocs (10) peut être connectée sur les extrémités libres (16) des supports (12) dans un sens de connexion (30) s'étendant transversalement au sens longitudinal de la barre de protection antichocs (10), dans lequel la barre de protection antichocs (10) comprend au moins un tube métallique (30) et au moins une partie plastique (32a, 32b) connectée au moins partiellement dans une extrémité du tube métallique (30),
**caractérisé en ce que** la partie plastique (32a, 32b) est configurée pour fixer la barre de protection antichocs (10) à un des supports (12) et dans lequel l'extrémité du tube métallique (30) comprend une fente partielle (38) qui complète une ouverture (40) de la partie plastique (32a, 32b) de façon à former une fente (28) de la barre de protection antichocs (10).

2. Dispositif antichocs selon la revendication 1,
**caractérisé en ce qu'**incluant en outre un moyen de connexion de verrouillage (44, 46) pour fixer la barre de protection antichocs (10) aux supports (12).

3. Dispositif antichocs selon l'une des revendications précédentes,
**caractérisé en ce que**
la barre de protection antichocs (10) comprend des fentes (28) qui courent parallèles au sens d'insertion (30) et dans lesquelles les extrémités (16) des supports (12) peuvent être insérées.

4. Dispositif antichocs selon la revendication 1,
**caractérisé en ce que**
la partie plastique (32a, 32b) comprend une projection (42) qui engage la fente partielle (38) du tube métallique (30) et immobilise la partie plastique (32a, 32b) contre une rotation à l'intérieur du tube métallique (30).

5. Dispositif antichocs selon l'une des revendications précédentes,
**caractérisé en ce que**
la partie plastique (32a) comprend une première région (34) équipée avec un profil en dents de scie configurée pour être insérée dans le tube métallique (30) et une région de collier (36), un diamètre extérieur de la partie plastique (32a) dans la région de collier (36) étant supérieur à un diamètre intérieur du tube métallique (30), en particulier étant égal à un diamètre extérieur du tube métallique (30).

6. Dispositif antichocs selon l'une des revendications précédentes,
**caractérisé en ce que**
le tube métallique (30) est constitué d'acier inoxydable.

7. Dispositif antichocs selon l'une des revendications précédentes,
**caractérisé en ce que**
l'extrémité libre (16) du support (12) connectée à la partie plastique (32a, 32b) a un renfoncement ou une ouverture (44) dans lequel/laquelle un tenon de verrouillage (46) formé sur une paroi intérieure de l'ouverture (40) de la partie plastique (32a, 32b) s'engage.

8. Dispositif antichocs selon l'une des revendications précédentes,
**caractérisé en ce que**
la partie plastique (32b) est formée comme un élément connecteur pour la connexion alignée de deux tubes métalliques (30).

9. Dispositif antichocs selon l'une des revendications précédentes,
**caractérisé en ce que**
la partie plastique (32a) est formée comme une coiffe d'extrémité pour fermer une extrémité ouverte du tube métallique (30).

10. Étagère incluant un dispositif antichocs selon l'une des revendications précédentes.

11. Étagère selon la revendication 10,
**caractérisée en ce que**
les supports (12) sont vissés sur une base (20) d'étagère de l'étagère.
